# EUROPEAN PATENT APPLICATION

(11) **EP 4 773 481 A1**
(43) Date of publication of application: **08.07.2026**
(21) Application number: 24859599.3
(22) Date of filing: 22.08.2024
(51) Int. Cl.: H02K 9/19

(54) **ROTARY ELECTRIC MACHINE**

(30) Priority: 30.08.2023 JP 2023139456
(71) Applicant: Eagle Industry Co., Ltd., Minato-ku Tokyo 105-8587 (JP)
(72) Inventor: IWA, Toshiaki, Tokyo 105-8587 (JP); OKAMOTO, Eiji, Tokyo 105-8587 (JP); MORI, Koichi, Tokyo 105-8587 (JP); KANKE, Toshihiro, Tokyo 105-8587 (JP); MORITA, Naoya, Tokyo 105-8587 (JP); UCHIYAMA, Tomohiro, Tokyo 105-8587 (JP)
(74) Representative: WSL Patentanwälte Partnerschaft mbB
(86) International application number: PCT/JP2024/029818
(87) International publication number: WO 2025/047566

(57) **Abstract**

A rotary electric machine that can be cooled while maintaining a rotational force is provided. In a rotary electric machine 1 including: a housing 10; a rotary shaft 20 inserted through the housing 10; a stator 40 connected to the housing 10 side; and a rotor 30 connected to the rotary shaft 20 side, the stator 40 has a plurality of teeth 41a arranged in a circumferential direction and coils 43 wound on the teeth 41a, and a gap 48 in an axial direction is provided between adjoining two of the coils 43 in a circumferential direction, and the rotary electric machine 1 further includes a nozzle 84 configured for spraying a refrigerant toward the gap 48.

## Description

### {TECHNICAL FIELD}

The present invention relates to a rotary electric machine, for example, a rotary electric machine which can be cooled by a fluid.

### {BACKGROUND ART}

In various industrial fields, rotary electric machines that generate a rotational force using a magnetic field generated by passing a current through a coil is used. Some of these rotary electric machines are equipped with a cooling structure to protect various components from the heat generated by the passage of the current.

For example, a rotary electric machine of Patent Citation 1 is mainly composed of a stator core, a rotor core, a blower, and a two-fluid spray nozzle. A stator coil is wound on a fixed core, and a rotor coil is wound on a rotating core. When a voltage is applied to the stator coil, a force is generated that rotates the rotor core. The two-fluid spray nozzle is used to spray the refrigerant in a mist form. This mist is supplied to the surfaces of the stator core and rotor core together with the cooling air supplied by the blower. The stator core and rotor core are cooled by the evaporation of the mist.

### {CITATION LIST}

### {Patent Literature}

Patent Citation 1: JP H05-207702 A (Page 2, FIG. 1)

### {SUMMARY OF INVENTION}

### {Technical Problem}

In such a rotary electric machine of Patent Citation 1, the mist-like refrigerant flows through the axial gap between the stator core and the rotor core to improve the cooling efficiency. However, when the mist-like refrigerant particles flow into the axial gap to gather together and form larger particles and then adhere to the surfaces of the stator core and rotor core, a resistance occurs. As a result, there was a problem with the decreasing rotational force.

The present invention has been made in view of such problems and an object of the present invention is to provide a rotary electric machine that can be cooled while maintaining a rotational force.

### {Solution to Problem}

In order to solve the problem, a rotary electric machine according to the present invention includes: a housing; a rotary shaft inserted through the housing; a stator connected to the housing; and a rotor connected to the rotary shaft, wherein the stator has a plurality of teeth arranged in a circumferential direction and coils wound on the teeth, a gap in an axial direction is provided between adjoining two of the coils in the circumferential direction, and wherein the rotary electric machine further comprises a nozzle configured for spraying a refrigerant toward the gap. According to the aforesaid feature, since the refrigerant sprayed from the nozzle is guided along the gap, the amount of the refrigerant flowing between the rotor and the stator can be reduced. Accordingly, it is possible to cool the stator while maintaining the rotational force of the rotor.

It may be preferable that the nozzle has a spray port which overlaps with the gap when viewed in the axial direction. According to this preferable configuration, the refrigerant is sprayed from one side toward the other side of the gap in the axial direction. Accordingly, the amount of the refrigerant flowing between the rotor and the stator can be further reduced.

It may be preferable that the spray port of the nozzle is directly connected to the gap. According to this preferable configuration, almost the entire amount of the sprayed refrigerant can be supplied into the gap. The amount of the refrigerant flowing between the rotor and the stator can be further reduced.

It may be preferable that a cylindrical member is disposed on an inner peripheral side of the stator. According to this preferable configuration, since the inner peripheral side of the gap is partitioned by the cylindrical member, the amount of the refrigerant flowing between the rotor and the stator can be further reduced.

It may be preferable that a heat exchanger is provided on a side opposite to the nozzle with the stator interposed therebetween. According to this preferable configuration, the refrigerant having passed through the gap can be efficiently collected. Accordingly, the amount of the refrigerant flowing between the rotor and the stator can be further reduced.

It may be preferable that the refrigerant has a boiling point of 100°C or less and an insulation resistance of 10⁸Ωm or more. According to this preferable configuration, it is possible to improve the cooling efficiency of the stator and to more reliably maintain the rotational force of the rotor.

It may be preferable that a plurality of the nozzles are provided. According to this preferable configuration, it is possible to improve the cooling efficiency of the stator.

In order to solve the problem, a rotary electric machine according to the present invention includes: a housing; a rotary shaft inserted through the housing; a stator connected to the housing; and a rotor connected to the rotary shaft, wherein the rotor has a through-hole extending in an axial direction, and wherein the rotary electric machine further comprises a nozzle spraying a refrigerant toward the through-hole. According to the aforesaid feature, since the refrigerant sprayed from the nozzle is guided along the through-hole, the amount of the refrigerant flowing between the rotor and the stator can be reduced. Accordingly, it is possible to cool the rotor while maintaining the rotational force of the rotor.

It may be preferable that the nozzle has a spray port which overlaps with the through-hole when viewed in the axial direction. According to this preferable configuration, the refrigerant is sprayed from one side toward the other side of the through-hole in the axial direction. Accordingly, the amount of the refrigerant flowing between the rotor and the stator can be further reduced.

It may be preferable that the spray port of the nozzle is directly connected to the through-hole. According to this preferable configuration, almost the entire amount of the sprayed refrigerant can be supplied into the through-hole. The amount of the refrigerant flowing between the rotor and the stator can be further reduced.

It may be preferable that a heat exchanger is provided on a side opposite to the nozzle with the rotor interposed therebetween. According to this preferable configuration, the refrigerant having passed through the through-hole can be efficiently collected. Accordingly, the amount of the refrigerant flowing between the rotor and the stator can be further reduced.

It may be preferable that the refrigerant has a boiling point of 100°C or less and an insulation resistance of 10⁸Ωm or more. According to this preferable configuration, it is possible to improve the cooling efficiency of the rotor and to more reliably maintain the rotational force of the rotor.

It may be preferable that the nozzle is connected to a first flow passage in the radial direction, the first flow passage branches off from a second flow passage which is formed inside the rotary shaft and which extends in the axial direction, and the first flow passage extends in the radial direction. According to this preferable configuration, the rotary shaft can be also cooled by the refrigerant.

It may be preferable that a mechanical seal is disposed in which a stationary seal ring connected to the housing and a rotary seal ring connected to the rotary shaft slide on each other. According to this preferable that, it is possible to form a space for supplying the refrigerant to the nozzle between the housing as a stationary member and the rotary shaft as a rotary member.

It may be preferable that a plurality of the nozzles are provided. According to this preferable configuration, it is possible to improve the cooling efficiency of the rotor.

In order to solve the problem, a rotary electric machine according to the present invention includes: a housing; a rotary shaft inserted through the housing; a stator connected to the housing; and a rotor connected the rotary shaft, wherein the stator has a plurality of teeth arranged in a circumferential direction and coils wound on the teeth, and a gap in an axial direction is provided between adjoining two of the coils in the circumferential direction, wherein the rotor has a through-hole extending in the axial direction, and wherein the rotary electric machine further comprises a rotor side nozzle configured for spraying a refrigerant toward the through-hole and a stator side nozzle configured for spraying a refrigerant toward the gap. According to the aforesaid feature, since the refrigerant sprayed from the nozzle is guided along the gap or the through-hole, the amount of the refrigerant flowing between the rotor and the stator can be reduced. Accordingly, it is possible to cool the stator and the rotor while maintaining the rotational force of the rotor.

It may be preferable that the refrigerant supply flow passages for the rotor side nozzle and the stator side nozzle are be different flow passages. According to this preferable configuration, each of the rotor side nozzle and the stator side nozzle can stably supply the refrigerant.

It may be preferable that the rotor has a permanent magnet and the permanent magnet is provided on the outer diameter side of the through-hole. According to this preferable configuration, the permanent magnet can be cooled not only by the refrigerant passing through the through-hole of the rotor, but also by the refrigerant passing through the gap of the stator.

It may be preferable that the rotor side nozzle and the stator side nozzle are arranged such that the rotor side nozzle and the stator side nozzle are equal to each other in spray. According to this preferable configuration, the temperature difference between the rotor and the stator in the radial direction can be reduced.

It may be preferable that a heat exchanger is provided on a side opposite to the rotor side nozzle and the stator side nozzle with the rotor and the stator interposed therebetween. According to this preferable configuration, the structure can be simplified. Further, the refrigerant having passed through the gap or the through-hole can be efficiently collected. Accordingly, the amount of the refrigerant flowing between the rotor and the stator can be further reduced.

### {BRIEF DESCRIPTION OF DRAWINGS}

FIG. 1 is a cross-sectional view of a rotary electric machine of a first embodiment according to the present invention.
FIG. 2 is a partially enlarged cross-sectional view of the rotary electric machine in the first embodiment.
FIG. 3 is a cross-sectional view taken along line A-A of FIG. 1.
FIG. 4 is a cross-sectional view taken along line B-B of FIG. 1.
FIG. 5 is a cross-sectional view of a rotary electric machine according to a second embodiment of the present invention.

### {DESCRIPTION OF EMBODIMENTS}

Modes for carrying out a rotary electric machine according to the present invention will be described below based on embodiments.

### {First embodiment}

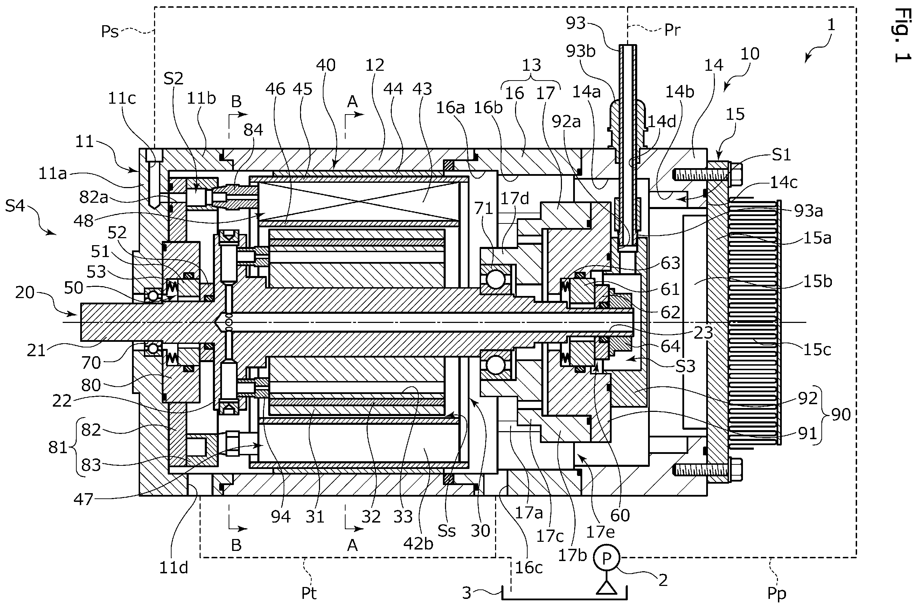

A rotary electric machine according to a first embodiment of the present invention will be described with reference to FIGS. 1 to 4. Hereinafter, the up, down, left, and right of FIG. 1 are referred to as the up, down, left, and right of the rotary electric machine.

As illustrated in FIG. 1, in a rotary electric machine 1 in the first embodiment, a rotor 30 and a stator 40 can be cooled by the refrigerant delivered by a pump 2.

The rotary electric machine 1 is mainly composed of a housing 10, a rotary shaft 20, the rotor 30, the stator 40, and two sets of mechanical seals 50 and 60.

Referring to FIGS. 1 to 4, the housing 10 has a rectangular parallelepiped shape with rounded corners on the outside and a cylindrical cavity on the inside. The housing 10 forms a first space S1 (see FIG. 1) inside the housing 10 together with the rotary shaft 20, the mechanical seals 50 and 60, and the like.

Referring to FIG. 1, the housing 10 is mainly composed of a cover member 11, a cylindrical member 12 surrounding the stator 40, a cylindrical member 13 surrounding a bearing 71, a cylindrical member 14 with an inner step, and a heat exchanger 15 in order from the left side in the axial direction.

The cover member 11 has a plate-shaped side wall 11a and a peripheral wall 11b extending rightward in the axial direction from the outer diameter end of the side wall 11a.

A through-hole is formed in the side wall 11a to penetrate the diameter center in the axial direction, and the bearing 70 is fitted thereinto. A left end of a body 21 of the rotary shaft 20 is fitted into the bearing 70.

Further, a stator side communication passage 11c is formed on the outer diameter side of the side wall 11a. The stator side communication passage 11c is a flow passage having an L-shaped cross-section, extends radially inward from the outer peripheral surface of the side wall 11a, extends axially rightward in the substantially perpendicular direction, and opens in the same direction.

An external stator side flow passage Ps is connected to a port that opens radially outward in the stator side communication passage 11c as indicated by the dashed line. The stator side flow passage Ps is branched and connected to a pump side flow passage Pp extending from the pump 2 together with a rotor side flow passage Pr.

Further, an opening that opens axially rightward in the stator side communication passage 11c communicates with a second space S2 to be described later.

A communication passage 11d that penetrates in the radial direction is formed in the peripheral wall 11b. The communication passage 11d is disposed at the lower end at the left axial end of the housing 10. An external tank side flow passage Pt connected to a tank 3 is connected to the communication passage 11d.

A walled annular member 80 is fixed on the right side of the side wall 11a. An O-ring seals a gap between the side wall 11a and the walled annular member 80. The body 21 of the rotary shaft 20 is inserted into the inner diameter side of the walled annular member 80.

A mechanical seal 50 seals a gap between the walled annular member 80 and the body 21 of the rotary shaft 20. This mechanical seal 50 separates the first space S1 and an external space S4.

The mechanical seal 50 is mainly composed of a stationary seal ring 51, a rotary seal ring 52, and a plurality of springs 53.

The stationary seal ring 51 is formed in an annular shape and is inserted into the peripheral wall of the walled annular member 80. Further, the body 21 of the rotary shaft 20 is inserted into the inner diameter side of the stationary seal ring 51. Further, a radial gap between the peripheral wall of the walled annular member 80 and the stationary seal ring 51 is sealed by an O-ring while allowing the axial movement.

The plurality of springs 53 are disposed in the axial gap between the side wall of the walled annular member 80 and the stationary seal ring 51. The spring 53 biases the stationary seal ring 51 toward the rotary seal ring 52 by a biasing force.

The rotary seal ring 52 is externally fitted and fixed to the body 21 of the rotary shaft 20, and the relative rotation with respect to the rotary shaft 20 is restricted. An O-ring seals a gap between the rotary seal ring 52 and the body 21.

Further, a stator side refrigerant storage member 81 is externally fitted and fixed to the walled annular member 80.

The stator side refrigerant storage member 81 is composed of an annular or plate-shaped plate member 82 and an annular ring member 83.

A communication passage 82a is formed in the plate member 82 to penetrate in the axial direction. The plate member 82 is externally fitted and fixed to the walled annular member 80 while the communication passage 82a communicates with the stator side communication passage 11c.

Further, a gap between the plate member 82 and the side wall 11a of the cover member 11 is sealed by an O-ring that is disposed to surround the communication passage 82a in the circumferential direction. Accordingly, almost the entire amount of refrigerant supplied to the stator side communication passage 11c passes through the communication passage 82a and flows into the second space S2.

The annular member 83 has an annular groove that is recessed from the left end surface in the axial direction to the right in the axial direction and is open toward the left in the axial direction. The annular groove is continuous in the circumferential direction. The plate member 82 and the ring member 83 are hermetically fixed together by an adhesive. The space defined by the plate member 82 and the annular member 83 is the second space S2.

Furthermore, in the stator side refrigerant storage member 81, the plate member 82 and the ring member 83 may be hermetically fixed by an appropriate method such as welding or using a packing, or may be integrally produced by an additional processing device, more specifically, a 3D printer, which is an example of such a method, as long as the second space S2 can be formed. The same applies to a rotor side refrigerant storage member 90 to be described later.

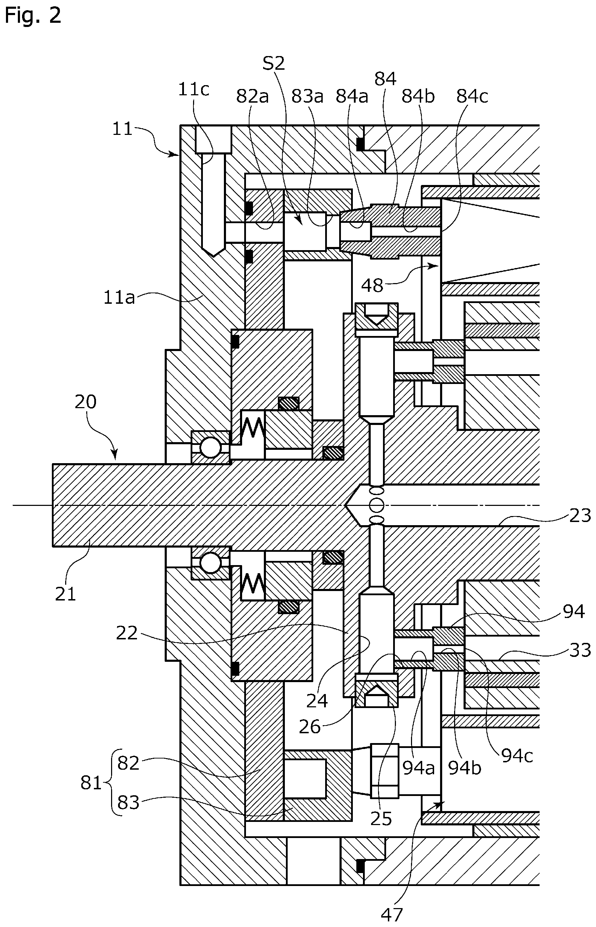

Referring to FIG. 2, in the ring member 83, twelve through-holes 83a are equally spaced apart and pass through the right axial side wall in the axial direction. Each through-hole 83a communicates with the second space S2. A stator side nozzle 84 is hermetically and internally fitted and fixed to each through-hole 83a.

The stator side nozzle 84 has a flow passage 84a which communicates with the second space S2 and a flow passage 84b which is located on the right side of the flow passage 84a in the axial direction and has a smaller flow passage cross-sectional area than the flow passage 84a, and the right end of the flow passage 84b serves as a spray port 84c. The axial center of the flow passages 84a and 84b and the axial center of the spray port 84c are approximately coaxial, and these axial centers are approximately parallel to the axial center of the rotary shaft 20.

The cylindrical member 12 has a substantially rectangular outer side and a cylindrical inner side when viewed from the axial direction.

The cylindrical member 12 is connected to the peripheral wall 11b of the cover member 11 in the axial direction. Further, an O-ring seals the axial gap between the cylindrical member 12 and the peripheral wall 11b. The inner diameter of the cylindrical member 12 is substantially the same as the inner diameter of the peripheral wall 11b of the cover member 11.

The stator 40 is internally fitted and fixed to the cylindrical member 12. The stator 40 is disposed in the first space S1.

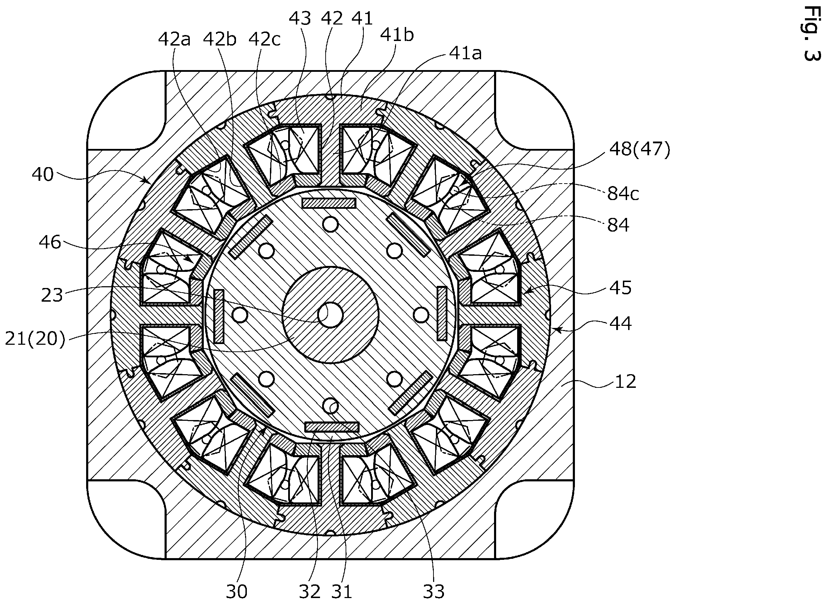

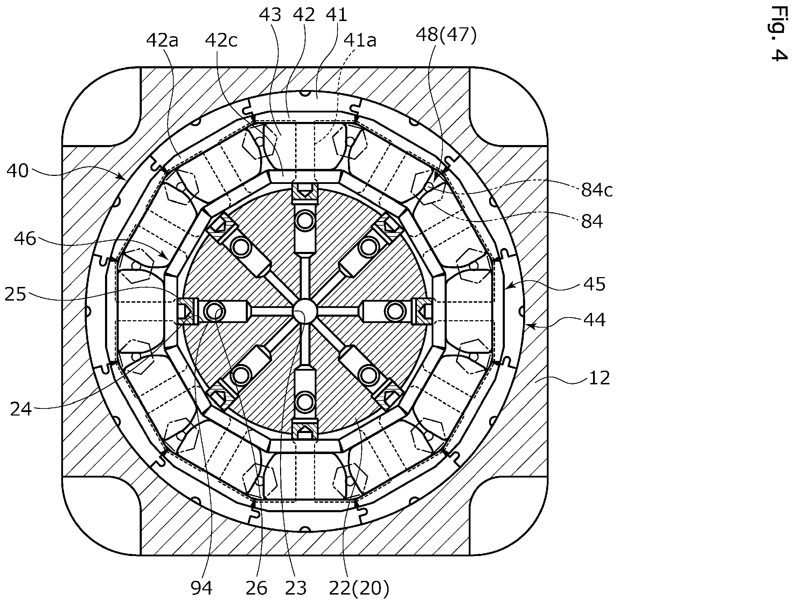

Referring to FIGS. 1 to 4, the stator 40 is mainly composed of twelve equally spaced stator cores 41 (see FIGS. 3 and 4), bobbins 42 externally mounted on teeth 41a of the stator cores 41, and a coil 43 wound around the bobbin 42.

The stator core 41 is mainly composed of the teeth 41a (see FIG. 3) extending in the radial direction and a plate portion 41b disposed on the outer diameter side, and has a substantially T-shape.

Referring to FIG. 3, the teeth 41a extend from the circumferential center of the plate portion 41b toward the inner diameter side, and the inner diameter side ends protrude on both circumferential sides.

The plate portion 41b is fitted in a concave-convex manner with the plate portion 41b of the stator core 41 adjacent in the circumferential direction. The plate portions 41b of the twelve stator cores 41 are connected in the circumferential direction to form a substantially cylindrical yoke 44. The yoke 44 is internally fitted and fixed to the cylindrical member 12.

Although not illustrated in the drawings, the bobbin 42 is composed of two divided bodies separated in the axial direction and is fixed inside the stator core 41. Furthermore, the bobbin may be composed of three or more divided bodies or may be a single body, and its structure may be changed as appropriate.

The bobbin 42 has an outer diameter side wall portion 42a extending along the inner diameter side end surface of the plate portion 41b, a frame portion 42b extending along the circumferential side end surfaces of the teeth 41a, and an inner diameter side wall portion 42c protruding to one or the other circumferential side beyond the inner diameter side ends of the teeth 41a.

Referring to FIG. 4, the outer diameter side wall portion 42a is a thick plate having both axial ends extending in the circumferential direction, and referring to FIG. 3, the axial gap of each thick plate, that is, the axial center portion is branched into two thin plates that sandwich the teeth 41a of the stator core 41.

The outer diameter side wall portions 42a of the twelve bobbins 42, the inner diameter ends of the plate portions 41b of the twelve stator cores 41, and the outer diameter ends of the teeth 41a of the twelve stator cores 41 are connected in the circumferential direction to form a substantially cylindrical outer cylinder 45. The outer cylinder 45 is provided on the inner diameter side of the yoke 44.

Further, as illustrated in FIG. 1, the outer cylinder 45 extends further in the axial direction than the yoke 44 and an inner cylinder 46 (described later). Furthermore, the outer cylinder 45 and the inner cylinder 46 are formed as a continuous integral and cylindrical shape for the simplicity of drawing in FIG. 1.

Although not illustrated directly in the drawings, the frame portion 42b has a thin plate shape with both axial ends extending in the circumferential direction and has a thin plate shape in which the axial center extends in the axial direction along the teeth 41a as illustrated in FIG. 3. In other words, the frame portion 42b has a rectangular frame shape when viewed from the radial direction.

Referring to FIG. 4, the inner diameter side wall portion 42c is a single thick plate with both axial ends extending in the circumferential direction, and referring to FIG. 3, the axial center portion is branched into two thin plates that sandwich the inner diameter ends of the teeth 41a of the stator core 41.

The inner diameter side wall portions 42c of the twelve bobbins 42 and the inner diameter ends of the teeth 41a of the twelve stator cores 41 are connected in the circumferential direction to form the inner cylinder 46 as a cylindrical member. The inner cylinder 46 has a substantially cylindrical shape and is disposed on the inner diameter side of the outer cylinder 45.

Further, as illustrated in FIG. 1, the inner cylinder 46 extends beyond the yoke 44 on both axial sides.

The coil 43 is wound around the teeth 41a, more specifically, around the frame portion 42b of the bobbin 42.

Referring to FIG. 3, a slot 47 that penetrates in the axial direction is formed between the teeth 41a of the stator cores 41 adjacent to each other in the circumferential direction, more specifically, between the frame portions 42b of the bobbins 42 adjacent to each other in the circumferential direction. Further, a gap 48 is left between the coils 43 adjacent to each other in the circumferential direction. The gap 48 is a part of the first space S1.

The spray port 84c of the stator side nozzle 84 is disposed toward the gap 48. More specifically, the spray port 84c of the stator side nozzle 84 overlaps with the gap 48 when viewed from the axial direction.

Further, as illustrated in FIG. 1, the right end of the stator side nozzle 84 is in contact with the left end of the coil 43. That is, the spray port 84c is connected directly to the gap 48 to be able to spray the refrigerant. Further, since the connection is made by abutting the end surfaces, the relative movement in the radial direction between the stator side nozzle 84 and the coil 43 can be allowed.

In the present invention, the state in which the spray port 84c is connected to the gap 48 to be able to directly spray the refrigerant means that the spray port 84c is directly connected to the gap 48. The same also applies to a rotor side nozzle 94 to be described later. Furthermore, the right end of the stator side nozzle 84 may be slightly separated from the left end of the coil 43.

The cylindrical member 13 is mainly composed of an outer cylindrical portion 16 and an inner cylindrical portion 17 connected to the inside thereof by a connecting portion 17a.

The outer cylindrical portion 16 has a large inner diameter peripheral wall 16a and a small inner diameter peripheral wall 16b. The large inner diameter peripheral wall 16a and the small inner diameter peripheral wall 16b have a substantially rectangular outer side and a cylindrical inner side when viewed from the axial direction. The inner diameter of the large inner diameter peripheral wall 16a is larger than the inner diameter of the small inner diameter peripheral wall 16b.

The large inner diameter peripheral wall 16a is fitted to the cylindrical member 12 in a concave-convex manner in the axial direction. Further, an O-ring seals an axial gap between the large inner diameter peripheral wall 16a and the cylindrical member 12. The inner diameter of the large inner diameter peripheral wall 16a is substantially the same as the inner diameter of the cylindrical member 12.

Further, a communication passage 16c that penetrates in the radial direction is formed in the outer cylindrical portion 16. The communication passage 16c is disposed at the lower end of the housing 10 approximately at the center in the axial direction. The external tank side flow passage Pt connected to the tank 3 is connected to the communication passage 16c.

The outer cylindrical portion 16 and the inner cylindrical portion 17 are connected to each other by two connecting portions 17a disposed in the circumferential direction. The inner cylindrical portion 17 has a large diameter cylindrical portion 17b which is connected to the connecting portion 17a, a medium diameter cylindrical portion 17c which is continuous from the large diameter cylindrical portion 17b to the left side, and a small diameter cylindrical portion 17d which is continuous from the medium diameter cylindrical portion 17c to the left side.

Two connecting portions 17a are quarter-arc shaped when viewed in the axial direction to protrude from the inner peripheral surface of the small inner diameter peripheral wall 16b toward the inner diameter side, and are provided on one diameter side and the other diameter side. Furthermore, only one connecting portion 17a is illustrated in FIG. 1.

The large diameter cylindrical portion 17b has a cylindrical shape and extends axially rightward from the inner diameter side of the right end of each connecting portion 17a. Further, the outer peripheral surface of the large diameter cylindrical portion 17b is disposed on the inner diameter side of the inner peripheral surface of the small inner diameter peripheral wall 16b.

Two communication passages 17e that penetrate in the axial direction are formed between one connecting portion 17a and the other connecting portion 17a in the circumferential direction and between the small inner diameter peripheral wall 16b and the large diameter cylindrical portion 17b in the radial direction. These communication passages 17e are a part of the first space S1.

The medium diameter cylindrical portion 17c is formed in a cylindrical shape extending axially leftward from the inner diameter side of the left end of the large diameter cylindrical portion 17b. The outer diameter of the medium diameter cylindrical portion 17c is smaller than the outer diameter of the large diameter cylindrical portion 17b.

The small diameter cylindrical portion 17d is formed in a cylindrical shape extending axially leftward from the radial center of the left end of the medium diameter cylindrical portion 17c. The outer diameter of the small diameter cylindrical portion 17d is smaller than the outer diameter of the medium diameter cylindrical portion 17c.

The bearing 71 is internally fitted and fixed to the small diameter cylindrical portion 17d. A portion slightly on the right side of the axial center of the body 21 of the rotary shaft 20 is internally fitted and fixed to the bearing 71.

The rotor side refrigerant storage member 90 is fixed to the large diameter cylindrical portion 17b. The rotor side refrigerant storage member 90 forms a third space S3 inside the rotor side refrigerant storage member 90 to be sealed from the first space S1 together with the rotary shaft 20, the mechanical seal 60, and the like.

The rotor side refrigerant storage member 90 is composed of a stepped cylindrical member 91 having a flange and a cover member 92 having a flange.

The flange of the stepped cylindrical member 91 is fixed on the right side of the large diameter cylindrical portion 17b. An O-ring seals a gap between the large diameter cylindrical portion 17b and the flange. The body 21 of the rotary shaft 20 is inserted on the inner diameter side of the stepped cylindrical member 91.

The mechanical seal 60 seals a gap between the stepped cylindrical member 91 and the body 21 of the rotary shaft 20. This mechanical seal 60 separates the first space S1 and the third space S3.

The mechanical seal 60 is composed of a stationary seal ring 61, a rotary seal ring 62, a plurality of springs 63, and a retainer 64.

The stationary seal ring 61 is formed in an annular shape and is inserted into the peripheral wall of the stepped cylindrical member 91. Further, the body 21 of the rotary shaft 20 is inserted on the inner diameter side of the stationary seal ring 61. Further, a radial gap between the peripheral wall of the stepped cylindrical member 91 and the stationary seal ring 61 is sealed by an O-ring while allowing the axial movement.

The plurality of springs 63 are arranged in the axial gap between the side wall of the stepped cylindrical member 91 and the stationary seal ring 61. The spring 63 biases the stationary seal ring 61 toward the rotary seal ring 62 by a biasing force.

The rotary seal ring 62 is externally fitted and fixed to the body 21 of the rotary shaft 20, and the relative rotation with respect to the rotary shaft 20 is restricted. Further, the rotary seal ring 62 is prevented from coming off by the retainer 64. An O-ring seals a gap between the rotary seal ring 62 and the body 21.

Further, the flange of the cover member 92 is fixed to the right end of the stepped cylindrical member 91. An O-ring seals a gap between the stepped cylindrical member 91 and the cover member 92. The space defined by the stepped cylindrical member 91 and the cover member 92 is the third space S3.

Further, a rotor side communication passage 92a that penetrates the flange in the radial direction is formed in the cover member 92. The rotor side communication passage 92a communicates with the third space S3.

A tip connector 93a of a pipe 93 connected to the external rotor side flow passage Pr is hermetically connected to a port that opens radially outward in the rotor side communication passage 92a as indicated by the dashed line.

The cylindrical member 14 has a large inner diameter peripheral wall 14a, a medium inner diameter peripheral wall 14b, and a small inner diameter peripheral wall 14c. The large inner diameter peripheral wall 14a, the medium inner diameter peripheral wall 14b, and the small inner diameter peripheral wall 14c are each substantially rectangular shape on the outside when viewed in the axial direction, and cylindrical shape on the inside. The inner diameter of the large inner diameter peripheral wall 14a is larger than the inner diameter of the medium inner diameter peripheral wall 14b. The inner diameter of the medium inner diameter peripheral wall 14b is larger than the inner diameter of the small inner diameter peripheral wall 14c.

The large inner diameter peripheral wall 14a is connected to the outer cylindrical portion 16 in the axial direction. Further, an O-ring seals an axial gap between the large inner diameter peripheral wall 14a and the outer cylindrical portion 16. The inner diameter of the large inner diameter peripheral wall 14a is smaller than the inner diameter of the small inner diameter peripheral wall 16b of the outer cylindrical portion 16.

Further, a through-hole 14d that penetrates the large inner diameter peripheral wall 14a in the radial direction is formed in the cylindrical member 14. The pipe 93 is connected to the inside and outside of the housing 10 through the through-hole 14d. Further, a connector 93b seals a gap between the pipe 93 and the cylindrical member 14.

The heat exchanger 15 is mainly composed of a plate portion 15a that covers the opening of the cylindrical member 14, a plurality of vertical fins 15b, and a plurality of horizontal fins 15c. The plate portion 15a is fixed to the right end of the cylindrical member 14 by a bolt. A gasket seals a gap between the plate portion 15a and the cylindrical member 14.

The space defined by the plate portion 15a, the cylindrical member 14, the stepped cylindrical member 91, and the cover member 92 is a part of the first space S1.

The plurality of vertical fins 15b are inserted inside the small inner diameter peripheral wall 14c. That is, each vertical fin 15b is disposed in the first space S1. The horizontal fin 15c is disposed in the external space S4.

The rotary shaft 20 has a stepped cylindrical body 21 extending in the axial direction and a flange 22 extending radially outward from a position slightly to the left of the axial center of the body 21.

The right end of the body 21 in the axial direction is disposed inside the third space S3. Further, the body 21 is disposed in the external space S4 so that the left end in the axial direction protrudes to the left of the housing 10.

Referring to FIG. 2, the body 21 is provided with a main flow passage 23 that is recessed from the right end surface in the axial direction toward the left side in the axial direction and is open toward the right side in the axial direction. That is, the main flow passage 23 communicates with the third space S3. Further, the left end of the main flow passage 23 extends to the radial center of the flange 22.

Referring to FIGS. 2 and 4, the flange 22 has eight branch flow passages 24 that are connected to the left end of the main flow passage 23, extend in the radial direction, that is, in the outer radial direction, open radially outward and are equally arranged. The outer diameter end of each branch flow passage 24 is closed with a cap 25.

Further, referring to FIG. 2, the flange 22 is provided with a through-hole 26 that is connected to the inner diameter side of the cap 25 at the outer diameter end of each branch flow passage 24, extends to the right in the axial direction, and is open toward the right in the axial direction. That is, eight through-holes 26 are equally arranged (see FIG. 4). The rotor side nozzle 94 is hermetically and internally fitted and fixed to each through-hole 26.

As illustrated in FIG. 1, the rotor side nozzle 94 has a flow passage 94a which communicates with the branch flow passage 24 and a flow passage 94b which is located on the right side of the flow passage 94a in the axial direction and has a flow passage cross-sectional area smaller than the flow passage 94a, and the right end of the flow passage 94b serves as a spray port 94c. The axial center of the flow passages 94a and 94b and the axial center of the spray port 94c are approximately coaxial and approximately parallel to the axial center of the rotary shaft 20.

Referring to FIGS. 1 and 3, the rotor 30 is externally fitted and fixed to the axial center of the body 21 of the rotary shaft 20.

The rotor 30 is mainly composed of a cylindrical base material 31 and eight plate-shaped permanent magnets 32 embedded in the base material 31. The permanent magnets 32 are equally arranged.

Further, eight through-holes 33 which penetrate in the axial direction are equally arranged in the base material 31. The permanent magnet 32 is embedded on the outer diameter side of the through-hole 33.

As illustrated in FIGS. 1 and 3, the spray port 94c of the rotor side nozzle 94 is disposed toward the through-hole 33. More specifically, the spray port 94c of the rotor side nozzle 94 overlaps with the through-hole 33 when viewed in the axial direction.

Further, the right end of the rotor side nozzle 94 comes into contact with the left end of the base material 31. That is, the spray port 94c is directly connected to the through-hole 33. Furthermore, the right end of the rotor side nozzle 94 may be slightly separated from the left end of the rotor 30. Further, since the connection is made by abutting the end surfaces, the relative movement in the radial direction between the rotor side nozzle 94 and the coil 43 can be allowed.

Further, the outer peripheral surface of the base material 31 is disposed to be separated from the inner peripheral surface of the inner cylinder 46 in the stator 40 in the radial direction. That is, an annular gap Ss is left in the radial gap between the rotor 30 and the stator 40. Accordingly, the contact of the rotor 30 with the stator 40 is prevented during the rotation of the rotor.

Next, the cooling of the rotary electric machine 1 will be described. When cooling the rotary electric machine 1, the pump 2 is operated to send the refrigerant in the tank 3 to the pump side flow passage Pp. The refrigerant is a fluorine-based inert liquid that acts as an insulator with a boiling point of about 50°C and an insulation resistance of about 10⁹Ωm, and is in a liquid state when sent from the pump 2. In the following description, the fluorine-based inert liquid that is liquid will be referred to as liquid refrigerant, and the fluorine-based inert liquid that is gaseous will be referred to as gas refrigerant.

Furthermore, the type of refrigerant may be changed as appropriate as long as the refrigerant is an insulator with a boiling point of 100°C or less and an insulation resistance of 10⁸Ωm or more, and does not or is unlikely to chemically react with at least the steel members of the rotary electric machine 1.

Further, since the preferred temperature condition for the refrigerant is that its boiling point is higher than the room temperature and lower than the temperature of the heating element, that is, the temperature of the components that constitute the rotary electric machine, a temperature range of 50 to 70°C is particularly preferred.

Furthermore, in the present invention, the room temperature refers to the range of 20°C±15°C (5 to 35°C) as defined by the Japanese Industrial Standards (JIS Z 8703).

The liquid refrigerant sent to the pump side flow passage Pp is distributed to the stator side flow passage Ps and the rotor side flow passage Pr. Furthermore, a flow dividing valve may be provided on the downstream side of the pump side flow passage Pp to adjust the amount of the liquid refrigerant flowing into the stator side flow passage Ps and the amount of the liquid refrigerant flowing into the rotor side flow passage Pr. Further, the pump for sending the liquid refrigerant to the stator side flow passage Ps and the pump for sending the liquid refrigerant to the rotor side flow passage Pr may be individually provided.

The liquid refrigerant flowing into the stator side flow passage Ps is supplied to the second space S2 through the stator side communication passage 11c and sprayed from the spray port 84c of each stator side nozzle 84.

When the mist-like liquid refrigerant passes through the gap 48, the mist-like liquid refrigerant adheres to the coil 43 and the bobbin 42 defining the slot 47 and evaporates to thereby cool the stator core 41, the bobbin 42, and the coil 43. That is, the stator 40 can be cooled.

When the evaporated gas refrigerant passes through the gap 48, the gas refrigerant moves toward the heat exchanger 15 through the communication passage 17e.

Further, as illustrated in FIG. 1, the non-evaporated liquid refrigerant is more likely to be discharged toward the communication passage 17e than the gap Ss since the gap 48 extends axially to the right of the rotor 30 and the liquid refrigerant is sequentially sprayed from the stator side nozzle 84.

The liquid refrigerant flowing into the rotor side flow passage Pr is supplied to the third space S3 through the rotor side communication passage 92a. Next, the liquid refrigerant is distributed to eight branch flow passages 24 through the main flow passage 23, and sprayed from the spray port 94c of each rotor side nozzle 94. Since the spray port 94c is directly connected to the through-hole 33 of the rotor 30, almost the entire amount of the mist-like liquid refrigerant sprayed from the spray port 94c is supplied to the through-hole 33.

Here, since the rotor 30 fixed to the rotary shaft 20 and each rotor side nozzle 94 rotate together when the rotary shaft 20 rotates, the liquid refrigerant can be sprayed from the spray port 94c into the through-hole 33 with high precision.

When the mist-like liquid refrigerant passes through the through-hole 33, the liquid refrigerant adheres to the base material 31 defining the through-hole 33 and evaporates to thereby cool the base material 31 and the permanent magnet 32. That is, the rotor 30 can be cooled.

Since the liquid refrigerant is sequentially sprayed from the rotor side nozzle 94, the evaporated gas refrigerant passes through the through-hole 33 and then is likely to move toward the heat exchanger 15 through the communication passage 17e.

Further, since the liquid refrigerant is sequentially sprayed from the rotor side nozzle 94, the non-evaporated liquid refrigerant is likely to be discharged toward the communication passage 17e than the gap Ss.

In the heat exchanger 15, the horizontal fins 15c are cooled by a fluid such as the air in the external space S4, and thus the vertical fins 15b are also cooled through the plate portion 15a. The liquid refrigerant cooled and condensed by the vertical fins 15b adheres to the vertical fins 15b, and flows along the vertical fins 15b when the liquid refrigerant becomes granular and exceeds a certain size.

The liquid refrigerant dripping from the vertical fins 15b flows into the tank side flow passage Pt from the communication passage 16c and is discharged into the tank 3. That is, the liquid refrigerant having passed through the rotary electric machine 1 is stored in the tank 3. The inner diameter of the housing 10 increases as it moves away from the vertical fins 15b toward the communication passage 16c. In this embodiment, specifically, the inner diameter increases in the order of the small inner diameter peripheral wall 14c, the medium inner diameter peripheral wall 14b, and the large inner diameter peripheral wall 14a. Accordingly, the liquid refrigerant is easily guided to the communication passage 16c.

On the other hand, a part of the refrigerant that does not pass through the gap 48 or the through-hole 33 in the axial direction and flows out from the left end of the gap 48 or the through-hole 33 in the axial direction flows into the tank side flow passage Pt from the communication passage 11d and is discharged into the tank 3.

As described above, the rotary electric machine 1 of this embodiment can reduce the amount of the refrigerant flowing into the gap Ss between the rotor 30 and the stator 40 since the refrigerant sprayed from the stator side nozzle 84 is guided along the gap 48 of the stator 40. Accordingly, it is possible to cool the stator 40 while maintaining the rotational force of the rotor 30.

Further, since the spray port 84c of the stator side nozzle 84 overlaps with the gap 48 when viewed in the axial direction, the refrigerant is sprayed from the left side toward the right side of the gap 48 in the axial direction. Accordingly, the amount of the refrigerant flowing into the gap Ss between the rotor 30 and the stator 40 can be further reduced.

Further, since the spray port 84c is directly connected to the gap 48, almost the entire amount of the mist-like liquid refrigerant sprayed from the spray port 84c is supplied to the gap 48. Accordingly, the amount of the refrigerant flowing into the gap Ss between the rotor 30 and the stator 40 can be further reduced.

Further, since the inner peripheral side of the gap 48 is partitioned by the inner cylinder 46, the amount of the refrigerant flowing into the gap Ss between the rotor 30 and the stator 40 can be further reduced.

Further, since the heat exchanger 15 is disposed on the side opposite to the stator side nozzle 84 with the stator 40 interposed therebetween, the refrigerant having passed through the gap 48 can be efficiently collected. Accordingly, the amount of the refrigerant flowing into the gap Ss between the rotor 30 and the stator 40 can be further reduced.

Further, since the refrigerant has a boiling point of 100°C or less and an insulation resistance of 10⁸Ωm or more, it is possible to improve the cooling efficiency of the stator 40 and to more reliably maintain the rotational force of the rotor 30.

Further, since twelve stator side nozzles 84 are provided as many as the gaps 48, it is possible to improve the cooling efficiency of the stator 40.

Further, since each stator side nozzle 84 is connected to the flow passage extending from the common second space S2, the refrigerant can be supplied approximately evenly to each stator side nozzle 84.

Further, since the stator side nozzle 84 has the spray port 84c aligned with the gap 48, the sprayed refrigerant is prevented from excessively adhering to the vicinity of the spray port 84c such as the coil 43 and the like. Accordingly, the mist-like refrigerant can be easily supplied along the axial direction of the gap 48.

Further, in the rotary electric machine 1 of this embodiment, since the refrigerant sprayed from the rotor side nozzle 94 is guided along the through-hole 33 of the rotor 30, the amount of the refrigerant flowing into the gap Ss between the rotor 30 and the stator 40 can be reduced. Accordingly, it is possible to cool the rotor 30 while maintaining the rotational force of the rotor 30.

Further, since the spray port 94c of the rotor side nozzle 94 overlaps with the through-hole 33 when viewed in the axial direction, the refrigerant is sprayed from the left side toward the right side of the through-hole 33 in the axial direction. Accordingly, the amount of the refrigerant flowing into the gap Ss between the rotor 30 and the stator 40 can be further reduced.

Further, since the spray port 94c is directly connected to the through-hole 33, almost the entire amount of the mist-like liquid refrigerant sprayed from the spray port 94c is supplied to the through-hole 33. Accordingly, the amount of the refrigerant flowing into the gap Ss between the rotor 30 and the stator 40 can be further reduced.

Further, since the inner peripheral side of the gap 48 is partitioned by the inner cylinder 46, the amount of the refrigerant flowing into the gap Ss between the rotor 30 and the stator 40 can be further reduced.

Further, since the heat exchanger 15 is disposed on the side opposite to the rotor side nozzle 94 with the rotor 30 interposed therebetween, the refrigerant having passed through the through-hole 33 can be efficiently collected. Accordingly, the amount of the refrigerant flowing into the gap Ss between the rotor 30 and the stator 40 can be further reduced.

Further, since the refrigerant has a boiling point of 100°C or less and an insulation resistance of 10⁸Ωm or more, it is possible to improve the cooling efficiency of the rotor 30 and to more reliably maintain the rotational force of the rotor 30.

Further, since eight rotor side nozzles 94 are provided as many as the through-holes 33, it is possible to improve the cooling efficiency of the rotor 30.

Further, since the flow passages 23 and 24 connected to the rotor side nozzle 94 are the main flow passage 23 extending through the rotary shaft 20 in the axial direction and the branch flow passage 24 branched off from the main flow passage 23 and extending in the radial direction, the rotary shaft 20 can be also cooled by the refrigerant.

Further, since the rotor side nozzle 94 is connected to the flow passages 23 and 24 extending from the rotary shaft 20, the refrigerant can be supplied approximately evenly to each rotor side nozzle 94.

Further, since the mechanical seal 60 is disposed between the housing 10 and the rotary shaft 20, it is possible to form the third space S3 for supplying the refrigerant to each rotor side nozzle 94 between the housing 10 as a stationary member and the rotary shaft 20 as a rotary member.

Further, in the rotary electric machine 1 of this embodiment, since the refrigerant spayed from the stator side nozzle 84 is guided along the gap 48 of the stator 40 and the refrigerant sprayed from the rotor side nozzle 94 is guided along the through-hole 33 of the rotor 30, the refrigerant flowing into the gap Ss between the rotor 30 and the stator 40 can be reduced. Accordingly, it is possible to cool the rotor 30 and the stator 40 while maintaining the rotational force of the rotor 30.

Further, since the refrigerant supply flow passages for the rotor side nozzle 94 and the stator side nozzle 84 are separate flow passages, the refrigerant can be stably supplied to each of the rotor side nozzle 94 and the stator side nozzle 84.

Further, since the permanent magnet 32 provided in the rotor 30 is on the outer diameter side of the through-hole 33 in the rotor 30, the permanent magnet is cooled not only by the refrigerant passing through the through-hole 33 but also by the refrigerant passing through the gap 48.

Further, since the rotor side nozzle 94 and the stator side nozzle 84 are arranged in the same direction, the temperature difference between the rotor 30 and the stator 40 in the radial direction can be reduced.

Further, since the heat exchanger 15 is provided on the side opposite to the rotor side nozzle 94 and the stator side nozzle 84 with the rotor 30 and the stator 40 interposed therebetween, the gas refrigerant can be efficiently condensed while simplifying the structure.

Further, the refrigerant having passed through the gap 48 or the through-hole 33 can be efficiently collected. Accordingly, the amount of the refrigerant flowing into the gap Ss between the rotor 30 and the stator 40 can be further reduced.

Since the liquid refrigerant sprayed from the stator side nozzle 84 is in a mist form, high cooling efficiency can be exhibited in that evaporation more easily occurs than the case where the liquid refrigerant is continuously sprayed in a liquid form, the liquid refrigerant is sprayed in a liquid form, or the like.

Further, since the boiling point of the refrigerant is slightly higher than the room temperature, the refrigerant can be condensed by heat exchange even if the fluid passing through the external space S4 is air.

Further, since the housing 10 is disposed in the external space S4 other than the heat exchanger 15, the refrigerant can be condensed by the cooling using the fluid in the external space S4.

Further, since the stator side nozzle 84 is internally fitted and fixed to the through-hole 83a provided in the stator side refrigerant storage member 81, it is easy to change the nozzle depending on the application, and it is economical and easier to assemble because only the nozzle can be replaced. The same also applies to the rotor side nozzle 94.

### {Second embodiment}

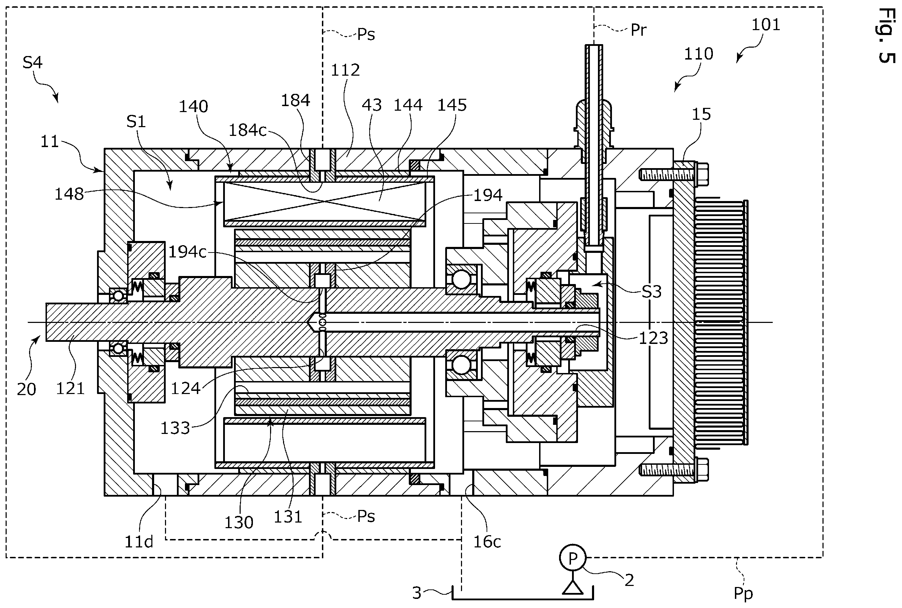

Next, a rotary electric machine according to a second embodiment of the present invention will be described with reference to FIG. 5. Furthermore, the description of the same configuration as the above-described embodiment will be omitted.

As illustrated in FIG. 5, in a rotary electric machine 101 in the second embodiment, a spray port 184c of a stator side nozzle 184 is disposed in a direction orthogonal to a gap 148 of a stator 140 extending in the axial direction.

More specifically, the stator side nozzle 184 is hermetically and internally fitted to a through-hole radially penetrating a cylindrical member 112 of a housing 110, a through-hole radially penetrating a yoke 144 of the stator 140, and a through-hole radially penetrating an outer cylinder 145 of the stator 140.

Further, each stator side nozzle 184 is connected to one of the stator side flow passages Ps branched off from the pump side flow passage Pp.

The liquid refrigerant sprayed from the spray port 184c is distributed to the left and right sides of the gap 148 in the axial direction. Further, since the spray port 184c is directly connected to the axial center of the gap 148, the amount of the refrigerant distributed to the axial left and right sides of the gap 148 is approximately equal.

A spay port 194c of a rotor side nozzle 194 is disposed in a direction orthogonal to a through-hole 133 of a rotor 130 extending in the axial direction.

More specifically, the rotor side nozzle 194 is hermetically and internally fitted to a concave portion which is recessed radially outward from an inner peripheral surface of a bottom 131 of the rotor 130 and communicates with the through-hole 133.

Further, a main flow passage 123 and each branch flow passage 124 are formed in a body 121 of a rotary shaft 120 to communicate with the rotor side nozzle 194.

The liquid refrigerant spayed from the spray port 194c is distributed to the left and right sides of the through-hole 133 in the axial direction. Further, since the spray port 194c is directly connected to the axial center of the through-hole 133, the amount of refrigerant distributed to the axial left and right sides of the gap 148 is approximately equal.

Further, the refrigerant discharged from the axial left side of the gap 148 or the axial left side of the through-hole 133 flows into the tank side flow passage Pt through the communication passage 11d and is discharged into the tank **3.** Furthermore, in order to efficiently condense the refrigerant discharged from the communication passage 11d, the heat exchanger different from the heat exchanger 15 may be provided between the communication passage 11d and the tank 3 or the heat exchanger may be provided in a part of the cover member 11.

Although the embodiments of the present invention have been described above with reference to the drawings, the specific configuration is not limited to these embodiments, and the present invention also includes modifications and additions that do not deviate from the scope of the present invention.

For example, in the above-described first and second embodiments, although a configuration has been described in which the rotary electric machine includes each of the stator side nozzle and the rotor side nozzle, the present invention is not limited thereto, and only one of the stator side nozzle and the rotor side nozzle may be provided.

Further, in the above-described first and second embodiments, although a configuration has been described in which the rotary electric machine includes a plurality of stator side nozzles, the present invention is not limited thereto, and only one stator side nozzle may be provided. The same also applies to the rotor side nozzle.

Further, in the above-described first and second embodiments, although a configuration has been described in which the spray port of the nozzle is directly connected to the gap or the through-hole, the present invention is not limited thereto, and the spray port may be separated from the gap or the through-hole.

Further, in the above-described first and second embodiments, although a configuration has been described in which the heat exchanger is a part of the housing, the present invention is not limited thereto, and the heat exchanger may not be provided in the housing, but may be provided in the middle of the flow passage.

Further, in the above-described first and second embodiments, although a configuration has been described in which the liquid refrigerant is sent from the pump, the present invention is not limited thereto, and the gas refrigerant may be sent from the pump. In such a configuration, it is preferable to provide a heat exchanger, that is, a condenser between the nozzle and the pump. Further, a compressor may be used as the pump. In such a configuration, the refrigerant is not limited to one that is liquid at room temperature, and may be changed as appropriate.

Further, in the above-described first and second embodiments, although a configuration has been described in which the mechanical seal is applied as a shaft sealing device, the present invention is not limited thereto, and a shaft sealing device other than the mechanical seal may be applied.

Further, in the above-described first and second embodiments, although a configuration has been described in which the cylindrical member is the inner cylinder of the stator, the present invention is not limited thereto, and the cylindrical member may be separated from the stator.

Further, in the above-described first and second embodiments, although a configuration has been described in which the stator side refrigerant storage member is separated from the housing, the present invention is not limited thereto, and the stator side refrigerant storage member may be integrated with the housing.

Further, in the above-described first and second embodiments, although a configuration has been described in which the coil is wound on the bobbin externally mounted on the teeth, the present invention is not limited thereto, and the coil may be directly wound on the teeth without the bobbin, the bobbin may form the teeth, or the configuration may be changed as appropriate.

Further, in the above-described first and second embodiments, although a configuration has been described in which the permanent magnet is disposed in the rotor, the present invention is not limited thereto, and an induction type rotary electric machine may be used in which the coil is wound on the rotor. In such a configuration, the refrigerant spraying nozzle may be disposed in the gap between the coils in the rotor.

Further, in the above-described first and second embodiments, although a configuration has been described in which the stator is provided on the outer periphery of the rotor to surround the rotor, the present invention is not limited thereto, and the rotor may be provided on the outer periphery of the stator to surround the stator.

Further, in the above-described first embodiment, although a configuration has been described in which the branch flow passage is formed in the flange integrated with the rotary shaft, the present invention is not limited thereto, and the branch flow passage may be formed on a member separated from the rotary shaft.

### {REFERENCE SIGNS LIST}

- 1: Rotary electric machine
- 2: Pump
- 3: Tank
- 10: Housing
- 15: Heat exchanger
- 20: Rotary shaft
- 23: Main flow passage
- 24: Branch flow passage
- 30: Rotor
- 32: Permanent magnet
- 33: Through-hole
- 40: Stator
- 41a: Teeth
- 46: Inner cylinder (cylindrical member)
- 48: Gap
- 50, 60: Mechanical seal
- 70, 71: Bearing
- 84: Stator side nozzle
- 84c: Spray port
- 94: Rotor side nozzle
- 94c: Spray port
- 101: Rotary electric machine
- 110: Housing
- 120: Rotary shaft
- 123: Main flow passage
- 124: Branch flow passage
- 130: Rotor
- 133: Through-hole
- 140: Stator
- 148: Gap
- 184: Stator side nozzle
- 184c: Spray port
- 194: Rotor side nozzle
- 194c: Spray port
- Pr: Rotor side flow passage
- Ps: Stator side flow passage
- S1: First space
- S2: Second space
- S3: Third space
- S4: External space
- Ss: Gap

## Claims

1. A rotary electric machine, comprising:
a housing;
a rotary shaft inserted through the housing;
a stator connected to the housing; and
a rotor connected to the rotary shaft,
wherein the stator has a plurality of teeth arranged in a circumferential direction and coils wound on the teeth,
a gap in an axial direction is provided between adjoining two of the coils in the circumferential direction, and
wherein the rotary electric machine further comprises a nozzle configured for spraying a refrigerant toward the gap.

2. The rotary electric machine according to claim 1,
wherein the nozzle has a spray port which overlaps with the gap when viewed in the axial direction.

3. The rotary electric machine according to claim 2,
wherein the spray port of the nozzle is directly connected to the gap.

4. The rotary electric machine according to claim 1,
wherein a cylindrical member is disposed on an inner peripheral side of the stator.

5. The rotary electric machine according to claim 1,
wherein a heat exchanger is provided on a side opposite to the nozzle with the stator interposed therebetween.

6. The rotary electric machine according to claim 1,
wherein the refrigerant has a boiling point of 100°C or less and an insulation resistance of 10⁸Ωm or more.

7. The rotary electric machine according to any one of claims 1 to 6,
wherein a plurality of the nozzles are provided.

8. A rotary electric machine, comprising:
a housing;
a rotary shaft inserted through the housing;
a stator connected to the housing; and
a rotor connected to the rotary shaft,
wherein the rotor has a through-hole extending in an axial direction, and
wherein the rotary electric machine further comprises a nozzle spraying a refrigerant toward the through-hole.

9. The rotary electric machine according to claim 8,
wherein the nozzle has a spray port which overlaps with the through-hole when viewed in the axial direction.

10. The rotary electric machine according to claim 9,
wherein the spray port of the nozzle is directly connected to the through-hole.

11. The rotary electric machine according to claim 8,
wherein a heat exchanger is provided on a side opposite to the nozzle with the rotor interposed therebetween.

12. The rotary electric machine according to claim 8,
wherein the refrigerant has a boiling point of 100°C or less and an insulation resistance of 10⁸Ωm or more.

13. The rotary electric machine according to claim 8,
wherein the nozzle is connected to a first flow passage in the radial direction, the first flow passage branches off from a second flow passage which is formed inside the rotary shaft and which extends in the axial direction, and the first flow passage extends in the radial direction.

14. The rotary electric machine according to claim 13,
wherein a mechanical seal is disposed in which a stationary seal ring connected to the housing and a rotary seal ring connected to the rotary shaft slide on each other.

15. The rotary electric machine according to any one of claims 8 to 14,
wherein a plurality of the nozzles are provided.

16. A rotary electric machine, comprising:
a housing;
a rotary shaft inserted through the housing;
a stator connected to the housing; and
a rotor connected the rotary shaft,
wherein the stator has a plurality of teeth arranged in a circumferential direction and coils wound on the teeth, and a gap in an axial direction is provided between adjoining two of the coils in the circumferential direction,
wherein the rotor has a through-hole extending in the axial direction, and
wherein the rotary electric machine further comprises a rotor side nozzle configured for spraying a refrigerant toward the through-hole and a stator side nozzle configured for spraying a refrigerant toward the gap.

17. The rotary electric machine according to claim 16,
wherein refrigerant supply flow passages for the rotor side nozzle and the stator side nozzle are different flow passages.

18. The rotary electric machine according to claim 16,
wherein the rotor has a permanent magnet, and the permanent magnet is provided on the outer diameter side of the through-hole.

19. The rotary electric machine according to any one of claims 16 to 18,
wherein the rotor side nozzle and the stator side nozzle are arranged such that the rotor side nozzle and the stator side nozzle are equal to each other in spray direction.

20. The rotary electric machine according to claim 19,
wherein a heat exchanger is provided on a side opposite to the rotor side nozzle and the stator side nozzle with the rotor and the stator interposed therebetween.
